# EUROPEAN PATENT SPECIFICATION

(11) **EP 3 075 922 B1**
(45) Date of publication and mention of the grant of the patent: **10.10.2018**
(21) Application number: 14862065.1
(22) Date of filing: 26.08.2014
(51) Int. Cl.: E04F 15/02, E04F 15/024

(54) **MODULAR FLOORING**
MODULARER FUSSBODEN
REVÊTEMENT DE SOL MODULAIRE

(30) Priority: 12.11.2013 CN 201310562290; 12.11.2013 CN 201320713753 U
(43) Date of publication of application: 05.10.2016
(73) Proprietor: Zhong, Yugang, Shenyang, Liaoning 110819 (CN)
(72) Inventor: Zhong, Yugang, Shenyang, Liaoning 110819 (CN)
(74) Representative: Office Kirkpatrick
(86) International application number: PCT/CN2014/085194
(87) International publication number: WO 2015/070657

(56) References cited:
- CN-A- 1 256 343
- CN-A- 102 864 900
- CN-A- 103 015 669
- CN-A- 103 572 939
- CN-U- 201 581 598
- CN-U- 201 605 778
- CN-U- 203 230 140
- CN-U- 203 626 188
- DE-U1-202012 011 157
- JP-A- 2013 068 054
- US-A- 4 893 441

## Description

### Technical Field

The present invention belongs to the technical field of white steel weldment and woodworking furniture, and particularly relates to a modular flooring which is an environment-friendly easy-to-maintain flooring made according to thermal and mechanical principles.

### Background

At present, the existing wood flooringpaved on radiant floor is easy to deform and has poor heat conduction effect, the existing composite flooring contains hazardous substances such as formaldehyde, and both of the existing floorings are inconvenient to maintain and disassemble. In addition, both of the existing floorings are paved directly on the ground or radiant floor and have poor comfort. Though an improvement is disclosed in DE 20 2012 011157 U1, where a space is inserted between the floor and the tiles and easy removal of any single tile is ensured, this system does not enable a secure fastening of tiles between them and long term life of the flooring.

It discloses a removable modular flooring with unit boards of one size and shape, the boards comprising a panel frame and panel, support legs and props.

### Summary

Aiming at the defects of the prior art, the present invention provides a modular flooring which is paved indoors, has the characteristics of easy disassembly and replacement, convenient maintenance, environmental protection, beautiful appearance, comfort, good heat conduction effect, no easy deformation, etc.,and also saves materials and human resources required for leveling with cement during pavement of floorings of other types.

The purpose of the present invention is achieved by a modular flooring according to claim 1.

Additionally, the following features of the dependent claims may be useful:
Heat radiation holes are formed in the panels.

The middle parts of the rectangular frames of the long boards are provided with a plurality of connecting rods.

Triangular sheets with through holes are fixed on the four corners of the rectangular frame of each frame, and the panels are fixed on the frames via the through holes of the triangular sheets, while the lifting legs are symmetrically mounted on the bottom of the four corners of the rectangular frame.

The fixed frame and the panels are all made of environment-friendly material.

The fixed frame and the panels are all finger-jointed.

The movable frame is L-shaped or rectangular.

Heat radiation holes are formed in the movable frame.

The present invention has the following beneficial effects:
The present invention can be paved indoors, has the characteristics of easy disassembly and replacement, convenient maintenance, environmental protection, beautiful appearance, comfort, good heat conduction effect, no easy deformation, etc.,and also saves materials and human resources required for leveling with cement during pavement of floorings of other types.

### Description of Figures

Figure 1 is the structural diagram of the modular flooring of the present invention.
Figure 2 is the structural diagram of the frame of the long board with props.
Figure 3 is the structural diagram of the frame of the short board with props.
Figure 4 is the structural diagram of the unit board of the present invention.
Figure 5 is the structural diagram of the paved frame of the present invention.

These figures show fixed frame 1, unit board 2, long board 3, short board 4, transverse row 5 of long and short boards , transverse row 6 of long boards, prop 7, panel frame 8, panel 9, rectangular frame 10, lifting support leg 11, heat radiation hole 12, connecting rod 13, triangular white steel sheet 14, movable frame 15, first frame 16, second frame 17, third frame 18, fourth frame 19, fifth frame 20, sixth frame 21, seventh frame 22 and eighth frame 23.

### Detailed Description

The present invention is further described in combination with the figures and embodiments.

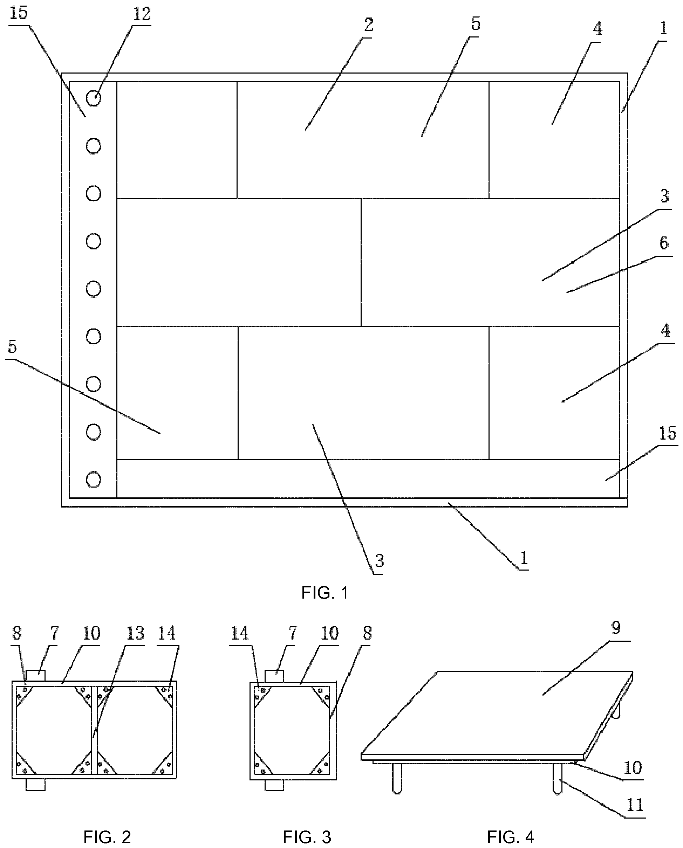

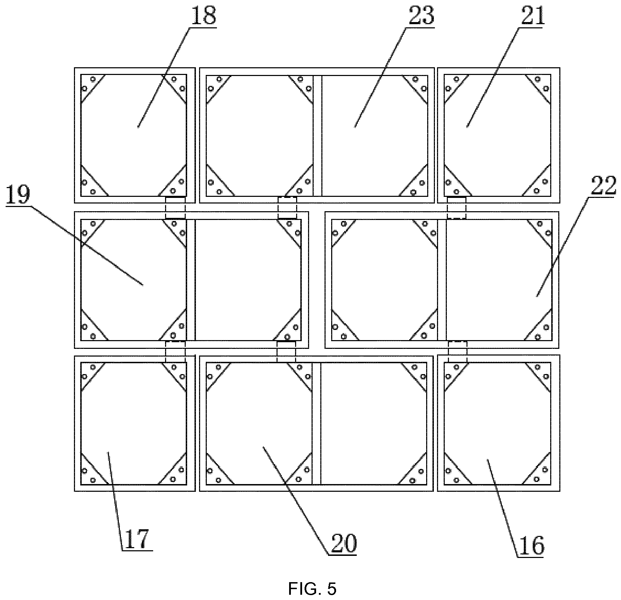

As shown in Figures 1 to 5, a modular flooring comprises an enclosed fixed frame 1 fixed on the wall, the fixed frame 1 is internally provided with a plurality of unit boards 2, and the upper surfaces of the fixed frame 1 and a the unit board 2 are in the same plane; the unit boards 2 comprise long boards 3 and short boards 4, and the length of the short boards 4 is half of that of the long boards 3; the long boards 3 and the short boards 4 are arranged in a transverse row 5 of long and short boards, the short boards 4 are arranged on both ends of the transverse row 5 of long and short boards, the long boards 3 are arranged between the short boards 4, and the width of the transverse row 5 of long and short boards is the same as that of the long boards 3; the short boards 4 and the long boards 3 in the same transverse row 5 of long and short boards have the same width; two long boards 3 are arranged in a transverse row 6 of long boards, and the width of the transverse row 6 of long boards is the same as that of the long boards 3; the transverse row 6 of long boards and the transverse row 5 of long and short boards are vertically spaced, and the long boards 3 in the transverse row 5 of long and short boards and the long boards 3 in the transverse row 6 of long boards are vertically staggered; a prop 7 is fixed on one side of each short board 4 adjacent to the transverse row 6 of long boards to support the adjacent transverse row 6 of long boards; if there is only one long board 3 in a transverse row 5 of long and short boards, then the long board 3 is not provided with a prop 7 by welding; props 7 are disposed between the long boards 3 in the transverse row 6 of long boards, and each prop 7 is arranged on one side of each long board 3 in the transverse row 6 of long boards adjacent to the transverse row 5 of long and short boards to support the middle part of the adjacent unit board 2, which can keep the upper surfaces of the unit boards 2 in the same plane, prevent the adjacent unit board 2 from subsidence due to load, and let the unit boards 2 to be taken out in order when the flooring needs maintenance or removal; both the long boards 3 and the short boards 4 are comprised of a panel frame 8 and a panel 9, a gap is formed between two adjacent panel frames 8, each panel 9 is fixed on the top of each panel frame 8, the area of the upper surface of each panel 9 is larger than that of the upper surface of each panel frame 8, and adjacent boards 9 are in close contact; each panel frame 8 is comprised of a rectangular frame 10 and lifting support legs 11, and the lifting support legs 11 are fixed on the bottom of the four corners of the rectangular frame 10 to adjust the height of the rectangular frame 10; each prop 7 is fixed on the bottom of the rectangular frame 10 and protrudes from the bottom edge of the rectangular frame 10, and each prop 7 is 10 cm long, 4 cm wide and 2 cm high, wherein the part protruding from the bottom edge of the rectangular frame 10 is 2.5 cm long, and two unit boards 2 cannot support each other simultaneously through the props 7; to adapt to different pavement areas, different transverse rows 5 of long and short boards can be in different widths, and different transverse rows 5 of long and short boards can be in different lengths; different transverse rows 6 of long boards can be in different widths, and different transverse rows 6 of long boards can be in different lengths.

If the flooring is paved on radiant floor, then heat radiation holes 12 with the diameter of 3 cm are formed in the panels 9.

The rectangular frame 10 of each panel frame 8 of the long board 3 is 160 cm long and 80 cm wide.

The rectangular frame 10 of each panel frame 8 of the short board 4 is 80 cm long and 80 cm wide.

The rectangular frame 10 of each panel frame 8 is made of square white steel tubes by welding.

The middle parts of the rectangular frames 10 of the long boards 3 are provided with one or two connecting rods 13 to increase the bearing capacity of each panel frame 8.

Triangular white steel sheets 14 with through holes are fixed on the four corners of the rectangular frame 10 of each panel frame 8, and the panels 9 are fixed on the panel frames 8 via the through holes of the triangular white steel sheets 14.

The lifting support legs 11 are symmetrically fixed on the bottom of the four corners of the rectangular frame 10 by welding.

The lifting support legs 11 adopt lifting bolts with the height of 10 cm.

An L-shaped movable frame 15 is arranged in the fixed frame 1, and fixed between the fixed frame 1 and the unit board 2 through a wood board fixed on the wall.

If the flooring is arranged on radiant floor, then heat radiation holes 12 with the diameter of 3 cm are formed in the movable frame 15.

The fixed frame 1, the panels 9 and the movable frame 15 are all made of environment-friendly material.

The fixed frame 1, the panels 9 and the movable frame 15 are all finger-jointed.

The pavement process of the present invention is described in combination with the figures.

As shown in Figures 1 to 5, when the flooring is paved, the panel frames 8 are firstly paved in the order from the first frame 16 to the eighth frame 23, wherein the first frame, the second frame, the third frame, the fourth frame and the sixth frame 21 are provided with the props 7; after pavement, the prop 7 on each panel frame 8 supports the middle part of the adjacent panel frame 8 to form a steady whole, and the eighth frame 23 which is finally paved is not provided with the prop 7 for the convenience of assembly and disassembly; the height can be adjusted by the lifting support legs 11, the upper surfaces of the adjusted panel frames 8 are in the same plane, and the panels 9 are fixed on the panel frames 8; the fixed frame 1 with the width of 1.8 cm is fixed on the wall, and finally, the L-shaped movable frame 15 is paved in the fixed frame 1 to keep the upper surfaces of the fixed frame 1 and the movable frame 15 in the same plane as the upper surfaces of the panels 9; a gap of 2 to 3 mm is formed between the outer side wall of the movable frame 15 and the inner side wall of the fixed frame 1, and the inner side wall of the movable frame 15 is in contact with the outer side wall of the unit board 2.

If the flooring needs assembly or maintenance, the movable frame 15 is disassembled firstly, and then the panel frames 8 are disassembled in the order from the eighth frame 23 to the first frame 16; if one unit board 2 is damaged, only the damaged unit board 2 needs replacement, thus saving cost and providing convenience.

If the flooring is paved on radiant floor, then heat radiation holes 12 are drilled in the movable frame 15 or the panels 9 to enable radiant floor to fully radiate heat.

## Claims

1. A modular flooring, comprising:
a fixed frame (1) internally provided with a plurality of unit boards (2),- wherein the unit boards comprise long boards (3) and short boards (4), and the short boards (4) are shorter than the long boards (3); the long boards and the short boards are arranged in a transverse row (5) of long and short boards (2), the short boards (4) are arranged on both ends of the transverse row (5) of long and short boards, a plurality of the long boards is arranged between the short boards, and the width of the transverse row (5) of long and short boards is the same as that of the long boards; the short boards and the long boards in the same transverse row (5) of long and short boards have the same width; a plurality of long boards are arranged in a transverse row (6) of long boards, and the width of the transverse row (6) of long boards is the same as that of the long boards; the transverse row of long boards and the transverse row of long and short boards are vertically spaced; the long boards in the transverse row (5) of long and short boards and the long boards in the transverse row (6) of long boards are vertically staggered; a prop (7) is fixed on one side of each short board adjacent to the transverse row of long boards, props are disposed between the long boards in the transverse row of long and short boards, and each prop is arranged on one side of each long board in the transverse row of long and short boards adjacent to the transverse row of long boards;-if there is only one long board (3) in the transverse row (5) of long and short boards, then the long board is not provided with a prop (7); props (7) are disposed between the long boards (3) in the transverse row (6) of long boards,and each prop (7) is arranged on one side of each long board (3) in the transverse row (6) of long boards adjacent to the transverse row (5) of long and short boards; both the long boards and the short boards are comprised of a panel frame (8) and a panel (9), a gap is formed between two adjacent panel frames (8), the panel (9) is fixed on the top of the panel frame(8); each panel frame (8) is comprised of a rectangular frame (10) and lifting support legs (11), the lifting support legs (11) are fixed on the bottom of the four corners of the rectangular frame (10) to adjust the height of the rectangular frame (10), each prop (7) is fixed on the bottom of the rectangular frame (10) and protrudes from the bottom edge of the rectangular frame (10), and two unit boards (2) cannot support each other simultaneously through the props (7); the lifting support legs (11) adopt lifting bolts, a movable frame (15) is arranged in the fixed frame and between the fixed frame and the unit boards.

2. The modular flooring of Claim 1, wherein that heat radiation holes (12) are formed in the panels (9).

3. The modular flooring of Claim 1, wherein middle parts of the rectangular frames (10) of the long boards (3) are provided with a plurality of connecting rods (13).

4. The modular flooring of Claim 1, wherein triangular sheets (14) with through holes are fixed on the four corners of the rectangular frame (10) of each panel frame (8), and the panels (9) are fixed on the panel frames (8) via the through holes of the triangular sheets (14); wherein the lifting legs (11) are symmetrically mounted on the bottom of the four corners of the rectangular frame (10).

5. The modular flooring of Claim 1, wherein the fixed frame (1) and the panels (9) are all made of environment-friendly material.

6. The modular flooring of Claim 1, wherein the fixed frame (1) and the panels (9) are all finger-jointed.

7. The modular flooring of Claim 1, wherein the movable frame (15) is L-shaped or rectangular.

8. The modular flooring of Claim 1, wherein heat radiation holes (12) are formed in the movable frame (15).

## Patentansprüche

1. Modularer Bodenbelag, umfassend:
einen festen Rahmen (1), der intern mit einer Vielzahl von Einzelbrettern (2) versehen ist,
- wobei die Einzelbretter lange Bretter (3) und kurze Bretter (4) umfassen und die kurzen Bretter (4) kürzer als die langen Bretter (3) sind; die langen Bretter und die kurzen Bretter in einer Querreihe (5) von langen und kurzen Brettern (2) angeordnet sind, die kurzen Bretter (4) an beiden Enden der Querreihe (5) von langen und kurzen Brettern angeordnet sind, eine Vielzahl der langen Bretter zwischen den kurzen Brettern angeordnet ist, und die Breite der Querreihe (5) von langen und kurzen Brettern die gleiche wie die der langen Bretter ist; die kurzen Bretter und die langen Bretter in der gleichen Querreihe (5) von langen und kurzen Brettern die gleiche Breite aufweisen; eine Vielzahl von langen Brettern in einer Querreihe (6) von langen Brettern angeordnet ist, und die Breite der Querreihe (6) von langen Brettern die gleiche wie die der langen Bretter ist; die Querreihe von langen Brettern und die Querreihe von langen und kurzen Brettern senkrecht beabstandet sind; die langen Bretter in der Querreihe (5) von langen und kurzen Brettern und die langen Bretter in der Querreihe (6) von langen Brettern senkrecht versetzt sind; eine Stütze (7) auf einer Seite jedes kurzen Bretts neben der Querreihe von langen Brettern befestigt ist, Stützen zwischen den langen Brettern in der Querreihe von langen und kurzen Brettern angeordnet sind, und jede Stütze auf einer Seite jedes langen Bretts in der Querreihe von langen und kurzen Brettern neben der Querreihe von langen Brettern eingerichtet ist;
- falls es nur ein langes Brett (3) in der Querreihe (5) von langen und kurzen Brettern gibt, dann ist das lange Brett nicht mit einer Stütze (7) versehen; die Stützen (7) sind zwischen den langen Brettern (3) in der Querreihe (6) von langen Brettern angeordnet, und jede Stütze (7) ist auf einer Seite jedes langen Bretts (3) in der Querreihe (6) von langen Brettern neben der Querreihe (5) von langen und kurzen Brettern eingerichtet; sowohl die langen Bretter als auch die kurzen Bretter bestehen aus einem Plattenrahmen (8) und einer Platte (9), eine Lücke ist zwischen zwei angrenzenden Plattenrahmen (8) gebildet, die Platte (9) ist oben an dem Plattenrahmen (8) befestigt; jeder Plattenrahmen (8) besteht aus einem rechteckigen Rahmen (10) und aus Hebestützbeinen (11), die Hebestützbeine (11) sind unten an den vier Ecken des rechteckigen Rahmens (10) befestigt, um die Höhe des rechteckigen Rahmens (10) anzupassen, jede Stütze (7) ist unten an dem rechteckigen Rahmen (10) befestigt und steht von dem unteren Rand des rechteckigen Rahmens (10) vor, und zwei Einzelbretter (2) können einander nicht gleichzeitig durch die Stützen (7) tragen; die Hebestützbeine (11) verwenden Hebebolzen, ein bewegbarer Rahmen (15) ist in dem festen Rahmen und zwischen dem festen Rahmen und den Einzelbrettern eingerichtet.

2. Modularer Bodenbelag nach Anspruch 1, wobei Wärmestrahllöcher (12) in den Platten (9) gebildet sind.

3. Modularer Bodenbelag nach Anspruch 1, wobei die mittleren Teile der rechteckigen Rahmen (10) der langen Bretter (3) mit einer Vielzahl von Verbindungsstäben (13) versehen sind.

4. Modularer Bodenbelag nach Anspruch 1, wobei dreieckige Bleche (14) mit Durchgangslöchern an den vier Ecken des rechteckigen Rahmens (10) jedes Plattenrahmens (8) befestigt sind, und die Platten (9) an den Plattenrahmen (8) über die Durchgangslöcher der dreieckigen Bleche (14) befestigt sind; wobei die Hebebeine (11) unten an den vier Ecken des rechteckigen Rahmens (10) symmetrisch montiert sind.

5. Modularer Bodenbelag nach Anspruch 1, wobei der feste Rahmen (1) und die Platten (9) alle aus einem umweltfreundlichen Material bestehen.

6. Modularer Bodenbelag nach Anspruch 1, wobei der feste Rahmen (1) und die Platten (9) alle keilgezinkt sind.

7. Modularer Bodenbelag nach Anspruch 1, wobei der bewegbare Rahmen (15) L-förmig oder rechteckig ist.

8. Modularer Bodenbelag nach Anspruch 1, wobei Wärmestrahllöcher (12) in dem bewegbaren Rahmen (15) gebildet sind.

## Revendications

1. Plancher modulaire, comprenant :
un cadre fixe (1) doté intérieurement de plusieurs panneaux unitaires (2), dans lequel les panneaux unitaires comprennent des panneaux longs (3) et des panneaux courts (4), les panneaux courts (4) sont plus courts que les panneaux longs (3) ; les panneaux longs et les panneaux courts sont disposés dans une ligne transversale (5) de panneaux longs et courts (2), les panneaux courts (4) sont disposés aux deux extrémités de la ligne transversale (5) de panneaux longs et courts, plusieurs panneaux longs sont disposés entre les panneaux courts, et la largeur de la ligne transversale (5) de panneaux longs et courts est la même que celle des panneaux longs ; les panneaux courts et les panneaux longs dans la même ligne transversale (5) de panneaux longs et courts sont de la même largeur ; plusieurs panneaux longs sont disposés dans une ligne transversale (6) de panneaux longs, et la largeur de la ligne transversale (6) de panneaux longs est la même que celle des panneaux longs ; la ligne transversale de panneaux longs et la ligne transversale de panneaux longs et courts sont espacées verticalement ; et les panneaux longs dans la ligne transversale (5) de panneaux longs et courts et les panneaux longs dans la ligne transversale (6) de panneaux longs sont décalées verticalement ; un support (7) est fixé d'un côté de chaque panneau court adjacent à la ligne transversale de panneaux longs, des supports sont disposés entre les panneaux longs dans la ligne transversale de panneaux longs et courts, et chaque support est disposé d'un côté de chaque panneau long dans la ligne transversale de panneaux longs et courts adjacente à la ligne transversale de panneaux longs ; s'il n'y a qu'un seul panneau long (3) dans la ligne transversale (5) de panneaux longs et courts, le panneau long n'est pas doté d'un support (7) ; des supports (7) sont disposés entre les panneaux longs (3) dans la ligne transversale (6) de panneaux longs, et chaque support (7) est disposé d'un côté de chaque panneau long (3) dans la ligne transversale (6) de panneaux longs adjacente à la ligne transversale (5) de panneaux longs et courts ; les panneaux longs et les panneaux courts sont tous les deux constitués d'un cadre de plaque (8) et d'une plaque (9), un espacement étant formé entre deux cadres de plaque (8) adjacents, la plaque (9) étant fixée sur le dessus du cadre de plaque (8) ; chaque cadre de plaque (8) se compose d'un cadre rectangulaire (10) et de pieds supports de levage (11), les pieds supports de levage (11) étant fixés sur le dessous des quatre coins du cadre rectangulaire (10) pour ajuster la hauteur du cadre rectangulaire (10), chaque support (7) étant fixé sur le dessous du cadre rectangulaire (10) et dépasse du bord inférieur du cadre rectangulaire (10), et deux panneaux unitaires (2) ne peuvent pas se soutenir l'un l'autre simultanément via les supports (7) ; les pieds supports de levage (11) adoptent des boulons de levage, un cadre mobile (15) étant disposé dans un cadre fixe et entre le cadre fixe et les panneaux unitaires.

2. Plancher modulaire selon la revendication 1, dans lequel des orifices de radiation de chaleur (12) sont formés dans les planches (9).

3. Plancher modulaire selon la revendication 1, dans lequel les parties médianes des cadres rectangulaires (10) des panneaux longs (3) sont dotées de plusieurs tiges de connexion (13).

4. Plancher modulaire selon la revendication 1, dans lequel des feuilles triangulaires (14) avec des orifices traversants sont fixées aux quatre coins du cadre rectangulaire (10) de chaque cadre de plaque (8), et les plaques (9) sont fixées sur les cadres de plaque (8) via les orifices traversants des feuilles triangulaires (14) ; les pieds supports de levage (11) y sont montés symétriquement sur le dessous des quatre coins du cadre rectangulaire (10).

5. Plancher modulaire selon la revendication 1, dans lequel le cadre fixe (1) et les plaques (9) sont tous constitués d'un matériau écologique.

6. Plancher modulaire selon la revendication 1, dans lequel le cadre fixe (1) et les plaques (9) sont tous assemblés par assemblage à queue droite.

7. Plancher modulaire selon la revendication 1, dans lequel le cadre mobile (15) est en forme de L ou rectangulaire.

8. Plancher modulaire selon la revendication 1, dans lequel des orifices de radiation de chaleur (12) sont formés dans le cadre mobile (15).
